(19) Europäisches Patentamt
European Patent Office
Office européen des brevets

(11) **EP 4 389 393 A1**

(12) **EUROPEAN PATENT APPLICATION**

(43) Date of publication:
**26.06.2024 Bulletin 2024/26**

(21) Application number: **22215159.9**

(22) Date of filing: **20.12.2022**

(51) International Patent Classification (IPC):
**B29C 59/04** (2006.01)  **B29C 43/46** (2006.01)

(52) Cooperative Patent Classification (CPC):
**B29C 43/24; B29C 43/305; B29C 43/46;
B29C 59/046;** B29C 2043/463; B29C 2059/023

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Boegli-Gravures S.A.
2074 Marin-Epagnier (CH)**

(72) Inventors:
• **BOEGLI, Charles
2074 Marin-Epagnier (CH)**
• **DUMITRU, Gabriel
5415 Nussbaumen (CH)**
• **HEGGLIN, Max
2555 Brügg (CH)**

(74) Representative: **Weihs, Bruno Konrad
André Roland SA
IP Attorneys & Services
Avenue Collonges 21
1004 Lausanne (CH)**

(54) **HIGH SPEED OFF-LINE EMBOSSING**

(57) A method for seamlessly embossing micro- or nanostructures into at least one thermoformable layer of a sandwich structure, the sandwich structure comprising a layer of carrier substrate and a cover made of the at least one thermoformable layer. The micro- or nanostructures comprise at least embossing structures that are a combination of a plurality of structures, the combination comprising a first structure and a second structure, with respectively a first width and a second width in a scale of at least 5 to 1, or respectively a first height and a second height in the scale of at least 5 to 1. The method further comprises melting material of the at least one thermoformable layer to a viscous phase; applying the molten material of the at least one thermoformable layer onto the layer of carrier substrate to obtain the sandwich structure prior to embossing; maintaining the material of the at least one thermoformable layer in the viscous phase prior to embossing; feeding the sandwich structure in a nip of a set of a first embossing roller and a second embossing roller, the first embossing roller and the embossing micro- or nanostructures carried thereon being made from a single bulk material, the first embossing roller comprising the embossing micro- or nanostructures in form of at least a protrusion and/or at least a recess on its cylindrical surface, the second embossing roller having a smooth cylindrical surface, the at least one thermoformable layer of material being oriented towards the first embossing roller and the layer of carrier substrate oriented towards the second embossing roller; embossing the micro- or nanostructures into the at least one thermoformable layer; and controlling a temperature of the sandwich structure at an output of the nip to a solidifying temperature of the at least one thermoformable layer.

FIG. 1A

FIG. 1B

**Description**

Technical field

The invention is in the field of off-line embossing of micro- or nanostructures in a sandwich structure comprising a carrier substrate and a cover made of a thermoformable layer of material in a viscous phase.

Background art

It is generally known to emboss structures in a sandwich structure comprising a ground substrate and a viscous layer of material. US publication US 10'532'510 B2 to Pranov et al. relates to a method for manufacturing foils with a thermoplastic surface comprising what is claimed to be high-aspect ratio micro- or nanostructures. It explains that the term "high-aspect ratio structure" means a structure in which the width of the structure is low, and the depth of the structure is high. It further explains that the molding of such structures is challenging due to the rapid cooling of the melt surface. In the solution presented, the micro or nanostructured thermoplastics coating is produced by micro- or nanostructuring a cooling roller and by carefully choosing the extrusion coating process parameters. The throughput rate of the sandwich structure achieved may be in a range of 5-10 $m^2$/s. The process is able to make continuous areas of micro or nanostructures without significant seam lines and the ability to cover the whole area of the manufactured foil. Coming back to the aspect ratio of the micro or nanostructures, the publication states that this is above 2, more preferably above 1,5 and most preferably more than 1. The seam lines between individual high aspect ratio nanostructured areas have a width most preferably less than 2 $\mu$m, hence there are seam lines in this range of measurement. The cooling roller may be made by the application of a thin layer of liquid ceramic material precursor solution, then structuring the so-formed film by a mechanical process such as embossing, and curing it to a film of structured solid ceramic material and using it for the purpose of embossing the micro or nanostructures. Hence the US publication US 10'532'510 B2 has an inherent strong limitation in the height to depth ratio (the aspect ratio) of the embossed micro or nanostructures that are possible to emboss.

The present invention aims at improving the prior art method for embossing micro or nanostructures in a sandwich structure comprising the ground substrate and the thermoformable layer in a viscous phase, to obtain micro or nanostructures with proportions and more particularly heights not achievable in prior art.

Further aims of the present invention may include to eliminate seam lines between high aspect ratio nanostructured areas, achieve higher throughput rates of the sandwich structure, and emboss nano or microstructures which are made individually from a combination of structures respectively dimensioned with a plurality of scales from one to another.

Summary of invention

In a first aspect, the invention provides a method for seamlessly embossing micro- or nanostructures into at least one thermoformable layer of a sandwich structure, the sandwich structure comprising a layer of carrier substrate and a cover made of the at least one thermoformable layer. The micro- or nanostructures comprise at least embossing structures that are a combination of a plurality of structures, the combination comprising a first structure and a second structure, with respectively a first width and a second width in a scale of at least 5 to 1, or respectively a first height and a second height in the scale of at least 5 to 1. The method further comprises melting material of the at least one thermoformable layer to a viscous phase; applying the molten material of the at least one thermoformable layer onto the layer of carrier substrate to obtain the sandwich structure prior to embossing; maintaining the material of the at least one thermoformable layer in the viscous phase prior to embossing; feeding the sandwich structure in a nip of a set of a first embossing roller and a second embossing roller, the first embossing roller and the embossing micro- or nanostructures carried thereon being made from a single bulk material, the first embossing roller comprising the embossing micro- or nanostructures in form of at least a protrusion and/or at least a recess on its cylindrical surface, the second embossing roller having a smooth cylindrical surface, the at least one thermoformable layer of material being oriented towards the first embossing roller and the layer of carrier substrate oriented towards the second embossing roller; embossing the micro- or nanostructures into the at least one thermoformable layer; and controlling a temperature of the sandwich structure at an output of the nip to a solidifying temperature of the at least one thermoformable layer.

In a preferred embodiment, the feeding of the sandwich structure in the nip is done at a speed between 50 m/min and 1500 m/min.

In a further preferred embodiment, the feeding of the sandwich structure in the nip is done at a speed between 100 and 500 m/min.

In a further preferred embodiment, the carrier substrate is made of a fiber-based substance; and the step of applying of the molten material of the at least one thermoformable layer onto the layer of carrier substrate causes at least part of the molten material of the at least one thermoformable layer to infiltrate into interstices between the fibers the carrier substrate, thereby forming a strengthened conglomerate.

In a further preferred embodiment, the applying of the molten material of the at least one thermoformable layer onto the layer of carrier substrate comprises an injection under pressure of the molten material.

In a further preferred embodiment, the step of maintaining the material of the at least one thermoformable layer in a viscous phase comprises a thermal management of the material of the thermoformable layer by any one of the means from the list comprising an oven, an infrared source of heat, an electromagnetic radiation source, a heated mass, pressure heating.

In a further preferred embodiment, the first embossing roller comprises a single metal or a metallic alloy from the following list comprising steel, copper, aluminum, lead, nickel, tin, titanium, zinc, brass and bronze.

In a further preferred embodiment, the first embossing roller comprises a ceramic material such as carbides, oxides, nitrides, carbo-nitrides of one of the following elements: B, Al, Si, Cr, Ti or any combination thereof.

In a further preferred embodiment, the micro- or nanostructures further comprise any one of grooves and ridges.

In a further preferred embodiment, the thermoformable material is any one of the list comprising a thermoformable polymer and a thermoformable elastomer.

In a further preferred embodiment, the method further comprises providing the embossing roller with a coating configured to prevent an adhesion of the viscous phase of the at least one thermoformable layer, and to prevent a sticking phenomenon.

In a further preferred embodiment, the coating is a vacuum-deposited coating having a thickness of less than 10 $\mu$m, preferably less than 5 $\mu$m, and comprising diamond-like carbon (DLC) to homogeneously cover the micro or nanostructures.

In a further preferred embodiment, the carrier substrate material is any one of items from the list comprising a metallic film, a plastic film, a textile-based film, a foil, and a substrate with a fibrous structure.

In a further preferred embodiment, the method further comprises providing a second thermoformable layer on a side of the carrier substrate opposite to the side on which the at least one thermoformable layer is formed, maintaining a second material of the second thermoformable layer in a viscous phase prior to embossing; providing the second embossing roller with further micro- or nanostructures for embossing these in the second thermoformable layer; controlling a second temperature of the sandwich structure at an output of the nip to a solidifying temperature of the second thermoformable layer.

In a second aspect, the invention provides a system for seamlessly embossing micro- or nanostructures into at least one thermoformable layer of a sandwich structure, wherein the sandwich structure comprises a layer of carrier substrate and a cover made of the at least one thermoformable layer. The micro- or nanostructures comprise at least embossing structures that are a combination of a plurality of structures, the combination comprising a first structure and a second structure, with respectively a first width and a second width in a scale of at least 5 to 1, or respectively a first height and a second height in the scale of at least 5 to 1. The system comprises a melting system configured for melting material of the at least one thermoformable layer to a viscous phase; an application system configured for applying the molten material of the at least one thermoformable layer onto the layer of carrier substrate to obtain the sandwich structure prior to embossing; a first thermal management system configured for maintaining the material of the at least one thermoformable layer in the viscous phase prior to embossing; a conveyer system configured for feeding the sandwich structure in a nip of a set of a first embossing roller and a second embossing roller configured to emboss the micro or nanostructures into the at least one thermoformable layer. The first embossing roller and embossing micro- or nanostructures carried thereon are made from a single bulk material, the first embossing roller comprises the embossing micro- or nanostructures in form of at least a protrusion and/or at least a recess on its cylindrical surface. The second embossing roller has a smooth cylindrical surface, and the at least one thermoformable layer of material is oriented towards the first embossing roller and the layer of carrier substrate oriented towards the second embossing roller; and the system further comprises a second thermal management system configured for controlling a temperature of the sandwich structure at an output of the nip to a solidifying temperature of the at least one thermoformable layer.

In a further preferred embodiment, the sandwich structure further comprises a second thermoformable layer on a side of the carrier substrate opposite to the side on which the at least one thermoformable layer is formed, the first thermal management system is further configured to maintain a second material of the second thermoformable layer in the viscous phase prior to embossing; the second embossing roller is configured to comprise further micro- or nanostructures for embossing these in the second thermoformable layer; and the second thermal management system is further configured for controlling a second temperature of the sandwich structure at an output of the nip to a solidifying temperature of the second thermoformable layer.

Brief description of the drawings

The invention will be better understood through the detailed description of preferred embodiments and in reference to the following figures:

figures 1A and 1B are schematic illustrations of set-ups for seamlessly embossing micro or nanostructures into at least one thermoformable layer of a sandwich structure according to example embodiments of the invention;

figures 2A to 2D are schematic illustrations of embossing rollers comprising embossing micro or nanostructures according to example embodiments of the invention;

figures 3A to 3E show layered materials embossed according to example embodiments of the invention;

figure 4 contains a flowchart illustrating an embossing of micro or nanostructures into a thermoformable layer of a sandwich structure according to an example embodiment of the invention;

figures 5A to 5C contain schematic illustrations of set-ups to implement the method for seamlessly embossing according to example embodiments of the invention, wherein the applying of molten material of the thermoformable layer is realized in different manners;

figures 6A to 6E contain photographs of surfaces of embossed thermoformable layer carrying micro or nanostructures embossed according to example embodiments of the invention;

figures 7A to 7C illustrate examples of a thermoformable layer embossed with combined structures and conglomerates of these combined structures; and

figure 8 shows a preferred embodiment of an embossing roller according to the invention with a coating having anti-adhesion properties.

Same references will be used to designate same or similar features throughout the figures.

Detailed description of preferred embodiments

Glossary

**Width of structure:** a length measure of a surface of a footprint of the structure on a base surface on which the structure is placed, along its smaller dimension. The base surface on which the structure is placed may, depending on the case, for example be the base surface of an embossing tool, typically the base surface of a cylindrical embossing tool, or the base surface of another structure on which the structure is placed. In case the footprint is a circle, then the surface of the footprint is a disc, and the width of the structure corresponds to a diameter of the circle or disc. In case the footprint is a rectangle, then the surface of the footprint is rectangularly shaped, and the width of the structure corresponds to the length of its smaller side. Of course, other footprints are possible.

**Height of structure:** the longest segment that can be placed inside the structure in a direction perpendicular from the base surface on which the structure is placed. In case the structure is a cube, the longest segment corresponds to a length of an edge that is perpendicular to the base surface on which the cube is placed. In case the structure is dome-shaped, the longest segment corresponds to a segment perpendicular to the base surface on which the dome is placed, connecting a point of the dome furthest away from the base surface. In case that dome is a half circular sphere, the longest segment corresponds to a radius of that sphere.

**Scale:** the term scale in the context of the present description designates a proportion between two sets of dimensions, typically a first set of dimensions belonging to a first structure and a second set of dimensions belonging to a second structure, whereby the first set of dimensions may consist of a first width of the first structure and the second set of dimensions may consist of a second width of the second structure. Hence the scale between the first structure and the second structure in this example would be the proportion of the first width and the second width.

**Seamless embossing:** engraving and embossing technology that enables a homogeneously jointed embossed structure(s) into a thermoformable layer of a sandwich structure. In other words, a homogeneity of the embossed structure(s) all over the embossed area is ensured and the parameters of pitch between embossing structure(s) and further dimensions thereof are preserved in the embossed versions of the embossing structures, i.e., all over a sheet of thermoformable layer of the sandwich structure.

**Smooth:** in the context of the present description, the term applies to the surface of a second embossing roller that is said to have a smooth cylindrical surface. This means that the surface has a Ra value smaller than 1.0 $\mu$m.

**Embossing:** in the context of the present description, the process of transferring the protrusions and/or the recesses of a surface topography of a bulk body into a viscous layer, whereas the viscous layer fills the recesses of the surface topography and upon solidifying (e.g., by cooling) adopts the mirrored surface topography of the bulk body. Under these conditions, the thickness of the viscous layer is preferably larger than the peak-to valley height between the highest protrusion and the lowest recess of the surface topography.

**Off-line embossing:** a situation in which the embossing process is entirely separate (i.e., different production lines or facilities, different premises) from the manufacturing process in which the embossed sandwich structure are utilized (e.g., final packaging), so that there is no communication between the embossing equipment and the packaging equipment.

**Bulk:** in the context of the present description, the term "bulk" designates a tool which is made of a single material, i.e., an embossing tool which is made for example only of steel, or steel alloy, each being considered to be a "single material".

Preferred embodiments

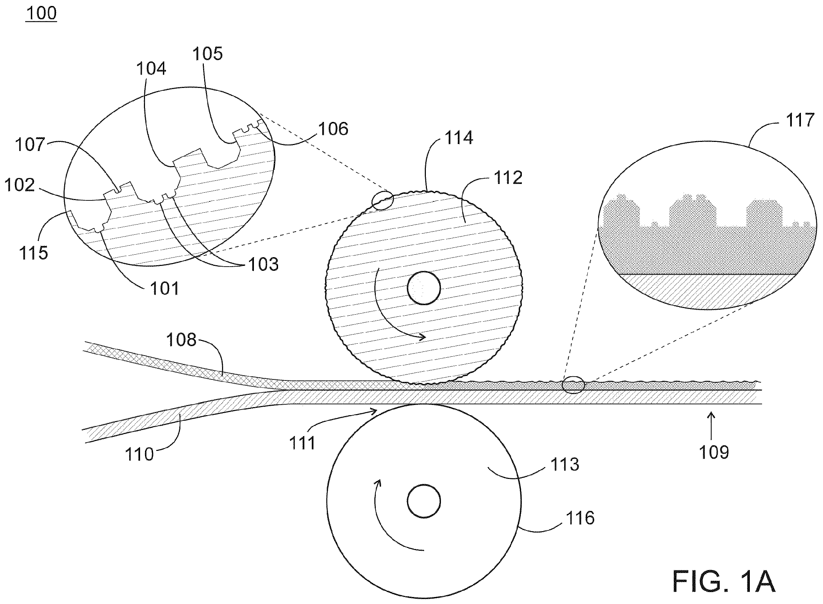

Referring to **figure 1A,** this contains a schematic illustration of a set-up **100** for seamlessly embossing micro- or nanostructures **101-107** (represented in a magnified view **115** of a cylindrical surface **114** of a first embossing roller **112**) into a thermoformable layer **108** of a sandwich structure **109** according to an example embodiment of the invention. The sandwich structure **109** comprises a layer of a carrier substrate **110** and a cover made of the thermoformable layer **108**. The micro- or nanostructures **101-107** comprise at least embossing structures that are a combination of a plurality of structures, the combination comprising a first structure **102, 104,** and a second structure **101, 103** with respectively a first width and a second width (width not explicitly marked in **figure 1A**) in a scale of at least 5 to 1, meaning that the first width is at least 5 times greater than the second width. The structures in **figure 1A** are not necessarily represented in the correct scale. Alternatively, or at the same time, the first structure **102, 104,** and the second structure **101, 103** respectively have a first height and a second height in the scale of at least 5 to 1, meaning that the first height is at least 5 times greater than the second height. This will be discussed in more detail based on further embodiments illustrated herein below. Before being applied onto the carrier substrate **110**, the thermoformable layer **108** is melted to a viscous phase. This happens on the left-hand side of **figure 1A** where the carrier substrate **110** and the thermoformable layer **108** are disjoined, however no energy-delivering device used for melting the thermoformable layer **108** is illustrated for a better readability of the figure. While it cannot be seen in **figure 1A,** the thermoformable layer **108** is maintained in a viscous phase prior to embossing, i.e., prior to being fed into a nip **111** formed between the first embossing roller **112** and the second embossing roller **113**, which each turn around their respective axis according to rotation arrows represented in the rollers. The thermoformable layer **108** is fed in the nip **111** as part of the sandwich structure **109**. The first embossing roller **112** carries the micro- or nanostructures **101-107** to be embossed, and the whole of the first embossing roller **112** including the micro- or nanostructures **101-107** are made from a single bulk material. The micro- or nanostructures **101-107** may be in form of at least a protrusion and/or at least a recess on the cylindrical surface **114** of the first embossing roller **112**, whereby the examples illustrated in the magnified view **115** are in form of recesses only. The second embossing roller **113** has a smooth cylindrical surface **116**. The thermoformable layer **108** is oriented towards the first embossing roller **112** and the layer of carrier substrate **110** is oriented towards the second embossing roller **113**. In the set-up **100** the micro- or nanostructures **101-107** are embossed into the thermoformable layer **108**, a magnified view **117** showing embossed structures corresponding to embossing micro- or nanostructures **101-107**. While the set-up **100** is represented schematically for a better readability, further aspects of the invention are not represented in **figure 1A** but will be described in further figures below since they need to be included in the inventive method and/or corresponding inventive system. These further aspects include a step of or corresponding means configured for controlling a temperature of the sandwich structure **109** at an output of the nip **111** to a solidifying temperature of the thermoformable layer **108**.

The step of maintaining the material of the thermoformable layer **108** above a glass transition temperature of the material, so that it remains in the viscous phase prior to embossing, may for example be realized using any one of the means from the list comprising an oven, an infrared source of heat, an electromagnetic radiation source, a heated mass, pressure heating.

The fact that the first embossing roller **112** and the micro- or nanostructures on its surface are made from a single bulk, bears multiple advantages. One advantage is that the micro- or nanostructures may be engraved directly in the surface of the first embossing roller **112.** In the prior art described herein above, the structuring of the embossing roller involves separate technologies such as a shim or a photoresist layer which imply important limitations to heights of the embossing structures. In contrast, and as will be seen along the examples described herein below, the direct engraving of the embossing structures at the surface of the first embossing roller **112** allows to create structures with a comparatively greater height than in prior art, but also to create combinations of structures, which is unknown in prior art. The use of a single bulk also further provides an advantage in thermal management of the first embossing roller **112,** since heat may more easily and more homogeneously distribute in a bulk than in an embossing roller using shims or photoresist technology as in prior art.

In preferred embodiments, the first embossing roller may comprise a single metal or a metallic alloy from the following list comprising steel, copper, aluminum, lead, nickel, tin, titanium, zinc, brass and bronze.

In even further preferred embodiments, the first embossing roller comprises a ceramic material such as carbides, oxides, nitrides, carbo-nitrides of one of the following elements: B, Al, Si, Cr, Ti or any combination thereof.

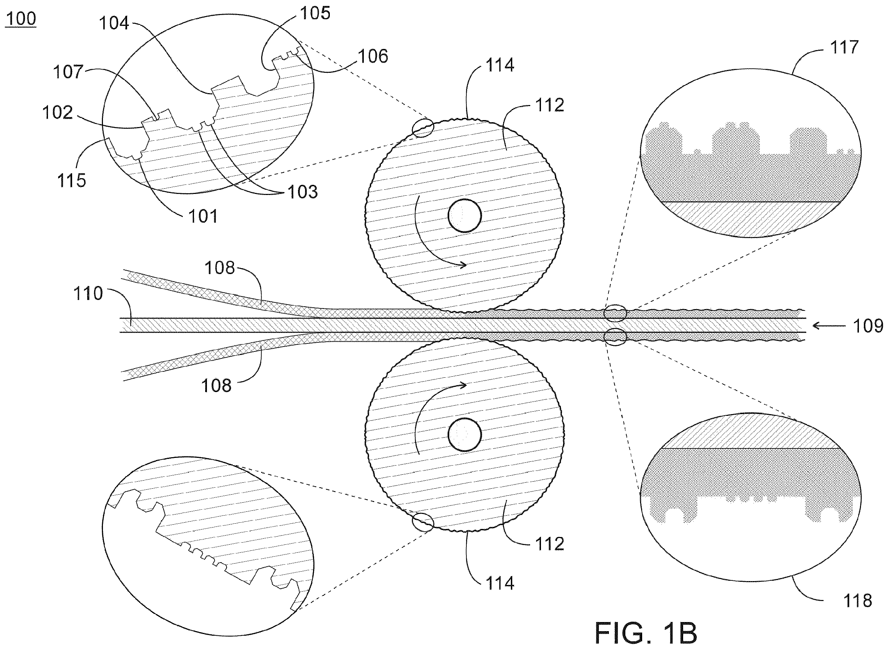

Referring to **figure 1B** this represents a variant of the set-up in **figure 1A** in which a different sandwich structure is prepared and embossed, using two thermoformable layers **108,** one on either side of the carrier substrate **110**. The set-up is in many constituents similar to that of **figure 1A** except that the second embossing roller is replaced by a roller similar to the first embossing roller **112**. This may carry micro- or nanostructures to be embossed on its cylindrical surface **114** to produce embossed structures in the corresponding thermoformable layer **108,** and which are not necessarily the same as on the other embossing roller **112,** as is illustrated in magnified view **118**.

In a preferred embodiment, the feeding of the sandwich structure **109** in the nip **111** is done at a speed between 50 m/min and 1500 m/min.

In an even more preferred embodiment, the feeding of the sandwich structure **109** in the nip **111** is done at a speed between 100 and 500 m/min.

In preferred embodiments the embossing rollers **112** and **113** may have diameters comprised between 100 mm and 2000 mm and lengths of their bulk cylindrical parts (i.e., without counting their shafts) comprised between 100 mm and 7500 mm.

In further preferred embodiments the carrier substrate comprises a sheet form of material with a width comprised between 100 mm and 7500 mm and much larger length, contained by a reel with the corresponding reel width between 100 mm and 7500 mm.

In preferred embodiments, the thermoformable material is any one of the list comprising a thermoformable polymer and a thermoformable elastomer.

In preferred embodiments, the first embossing roller may be provided with a coating configured to prevent an adhesion of the viscous phase of the at least one thermoformable layer, and to prevent a sticking phenomenon. The coating may be a vacuum-deposited coating having a thickness of less than 10 $\mu$m, preferably less than 5 $\mu$m, and comprising diamond-like carbon (DLC) to homogeneously cover the micro or nanostructures.

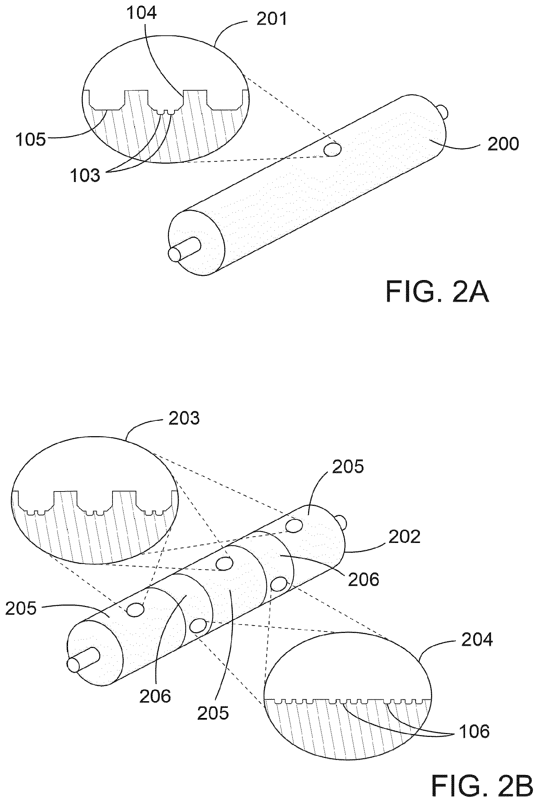

Referring to **figures 2A** to **2D,** these are schematic illustrations of embossing rollers similar to the first embossing roller **112** represented in **figure 1,** comprising embossing micro- or nanostructures according to example embodiments of the invention. The example embodiments show various configurations of micro- or nanostructures distributed in delimited zones of the embossing roller.

**Figure 2A** illustrates an embossing roller **200** and a magnified view **201** of a cylindrical surface of the embossing roller **200**, in which micro- or nanostructures **103-105** are shown representative for what may be found on the remaining cylindrical surface of the embossing roller **200.** The micro- or nanostructures comprise at least embossing structures that are a combination of a plurality of structures, the combination comprising the first structure **104** and the second structure **103** with respectively the first width and the second width (width not explicitly marked in **figure 2A)** in a scale of at least 5 to 1, meaning that the first width is at least 5 times greater than the second width. The structures in **figure 2A** are not necessarily represented in a correct scale. Alternatively, or at the same time, the first structure **104,** and the second structure **103** respectively have a first height and a second height in the scale of at least 5 to 1, meaning that the first height is at least 5 times greater than the second height. The magnified view **201** further contains representations of a simple, non-combined micro- or nanostructure **105**. The examples of micro- or nanostructures illustrated in the magnified view **201** are in form of recesses only.

**Figure 2B** illustrates an embossing roller **202** and magnified views **203** and **204** of a cylindrical surface of the embossing roller **202**, in which magnified view **203**'s content is similar to that of magnified view **201** and magnified view **204** contains micro- or nanostructures **106** representative for what may be found on the remaining cylindrical surface in corresponding zones **205** and **206** respectively, of the embossing roller **202**. The micro- or nanostructures **106** in magnified view **204** are simple, non-combined micro- or nanostructure. The examples of micro- or nanostructures illustrated in the magnified views **203** and **204** are in form of recesses only.

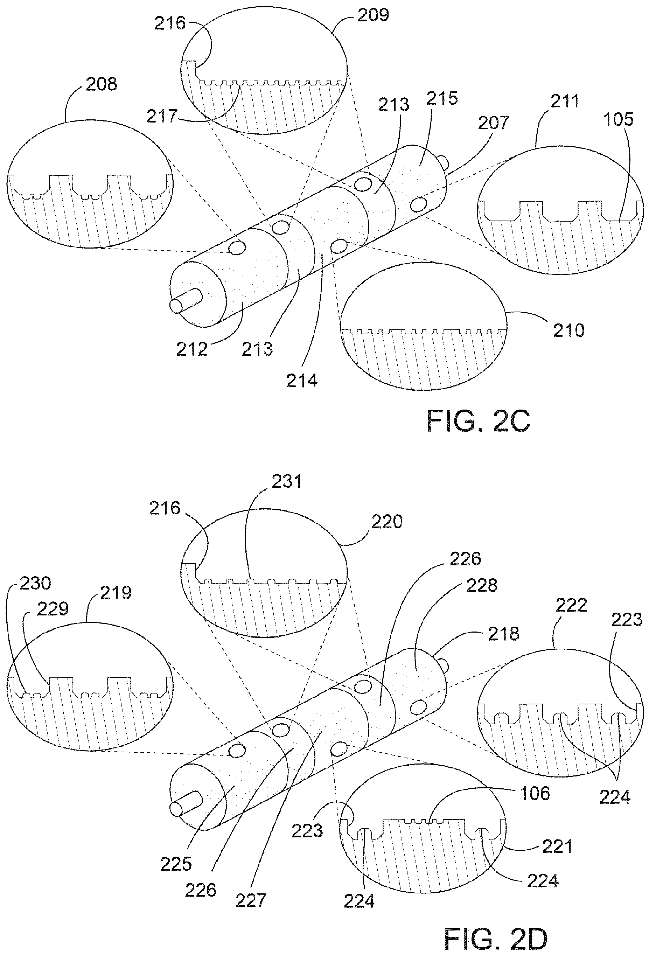

**Figure 2C** illustrates an embossing roller **207** and magnified views **208-211** of a cylindrical surface of the embossing roller **207**, in which magnified view **208**'s content is similar to that of magnified view **201**, magnified view **210**'s content is similar to that of magnified view **204,** magnified view **209** contains micro- or nanostructures **216** and **217,** and magnified view **211** contains micro- or nanostructures **105**, respectively representative for what may be found on the remaining cylindrical surface in corresponding zones **212-215,** of the embossing roller **207**. The examples of micro- or nanostructures illustrated in the magnified views **208-211** are in form of recesses only.

**Figure 2D** illustrates an embossing roller **218** and magnified views **219-222** of a cylindrical surface of the embossing roller **218,** in which magnified view **219**'s content illustrates micro- or nanostructures structures **230** in form of protuberances, impinging from a bottom of larger structures **229,** magnified view **220**'s content illustrates micro- or nanostructures **231** in form of protuberances, impinging from a bottom of larger structure **216,** magnified view **221** contains micro- or nanostructures **223** and **224** which are combined with each other, as well as micro- or nanostructures **106** which are simple structures, and magnified view **222** contains micro- or nanostructures **223** and protuberances **224** which are combined with each other, respectively representative for what may be found on the remaining cylindrical surface in corresponding zones **225-228,** of the embossing roller **218**. Coming back to magnified views **221** and **222,** the micro- or nanostructures comprise at least embossing structures that are a combination of a plurality of structures, the combination comprising third structure **223** and fourth structure **224** with respectively a third width and a fourth width (width not explicitly marked in **figure 2D)** in a scale of at least 5 to 1, meaning that the third width is at least 5 times greater than the fourth width. The structures in **figure 2D** are not necessarily represented in the correct scale. Alternatively, or at the same time, the third structure **223,** and the fourth structure **224** respectively have a third height and a fourth height in the scale of at least 5 to 1, meaning that the third height is at least 5 times greater than the fourth height. The examples of micro- or nanostructures illustrated in the magnified views **219-222** are in form of recesses and protuberances.

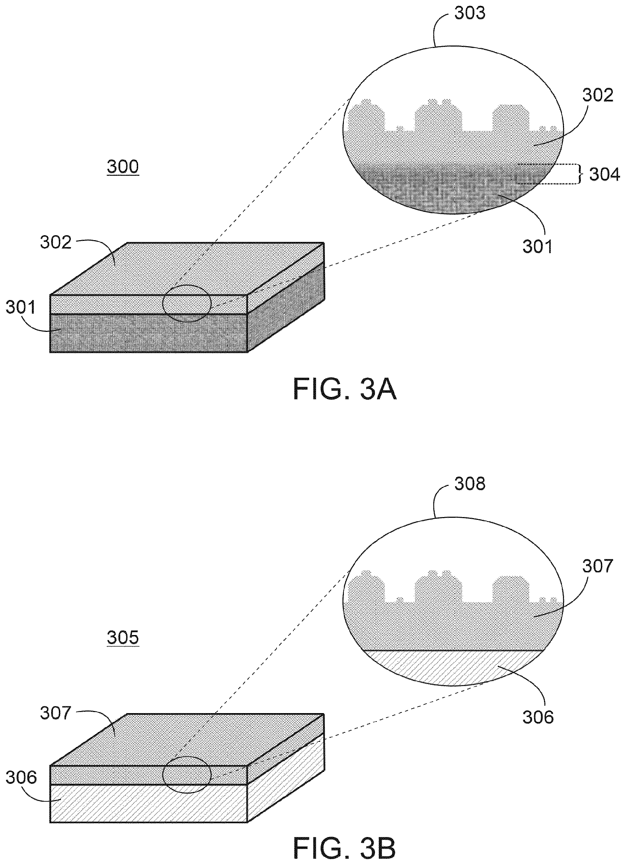

Referring now to **figure 3A** and **3B**, these show sandwich structures embossed according to example embodiments of the invention.

**Figure 3A** shows a sandwich structure **300** which comprises a layer of carrier substrate **301** and a cover made of a thermoformable layer **302.** The carrier substrate **301** in this example is made of a fiber-based substance. As may be seen in magnified view **303,** this has the consequence that the thermoformable layer **302**'s material, which as mentioned before was melted to a viscous phase before being applied to the carrier substrate **301,** at least in part infiltrated into interstices between the fibers of the carrier substrate **301** (interstices not visible in **figure 3A**) thereby forming a strengthened conglomerate illustrated at reference **304.** Furthermore, **figure 3A** shows embossed structures of the thermoformable layer **302** in the magnified view **303.**

**Figure 3B** shows a sandwich structure **305** which comprises a layer of a carrier substrate **306** and a cover made of a thermoformable layer **307.** The carrier substrate **306** in this example is made of a non-woven substance, e.g., a metallic or a polymer film, and is not permeable to molten material of the thermoformable layer **307.** As may be seen in magnified view **308,** this has the consequence that the thermoformable layer **307**'s material, which as mentioned before was melted to the viscous phase before being applied to the carrier substrate **306,** remains at a surface of the carrier substrate **306** without infiltrating in the carrier substrate **306.** Furthermore, **figure 3B** shows embossed structures of the thermoformable layer **307** in the magnified view **308.**

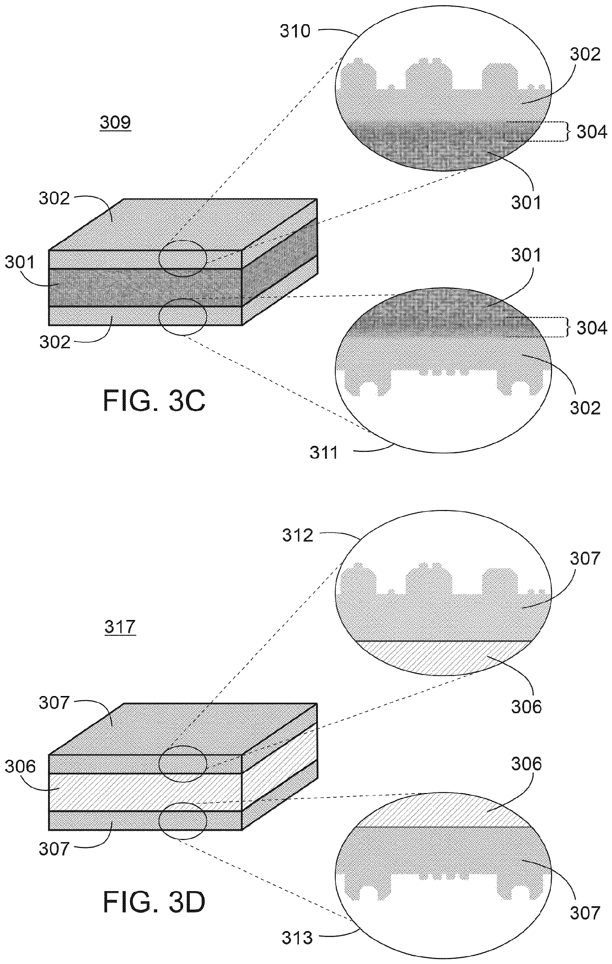

**Figure 3C** shows a sandwich structure **309** which comprises the layer of carrier substrate **301** and on both of the sides of the carrier substrate **301** one cover made of the thermoformable layer **302.** The carrier substrate **301** is again made of a fiber-based substance. As may be seen in magnified view **310** with one of the thermoformable layers **302,** this has the consequence that the thermoformable layer **302**'s material, which as mentioned before was melted to the viscous phase before being applied to the carrier substrate **301,** at least in part infiltrated into interstices of the fibers of the carrier substrate **301** (interstices not visible in **figure 3C)** thereby forming a strengthened conglomerate illustrated at reference **304.** Magnified view **311** shows the other one of the thermoformable layers **302** which also forms a strengthened conglomerate illustrated at reference **304.**

Furthermore, **figure 3C** shows embossed structures of the thermoformable layer **302** in the magnified views **310** and **311.**

**Figure 3D** shows a sandwich structure **317** which comprises the layer of carrier substrate **306** and on both of the sides of carrier substrate **306,** one cover made of the thermoformable layer **307.** The carrier substrate **306** in this example is made of a non-woven substance, e.g., a metallic or a polymer film, and is not permeable to molten material of the thermoformable layers **307.** As may be seen in magnified views **312** and **313,** this has the consequence that the thermoformable layer **307**'s material, which as mentioned before was melted to the viscous phase before being applied to the carrier substrate **306,** remains at the surface of the carrier substrate **306** without infiltrating in the carrier substrate **306.**

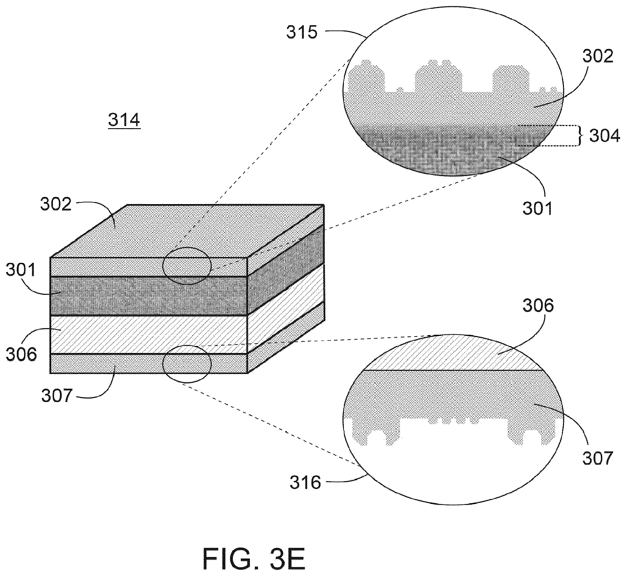

Furthermore, **figure 3E** shows embossed structures of the thermoformable layers **307** in the magnified view **312** and **313.**

**Figure 3F** shows a sandwich structure **314** which comprises 2 layers of carrier substrate respectively **301** and **306,** with each a cover made of the thermoformable layer respectively **302** and **307** known from the previous examples. Magnified views **315** and **316** show respectively a case for the fiber-based substance and the non-woven substance.

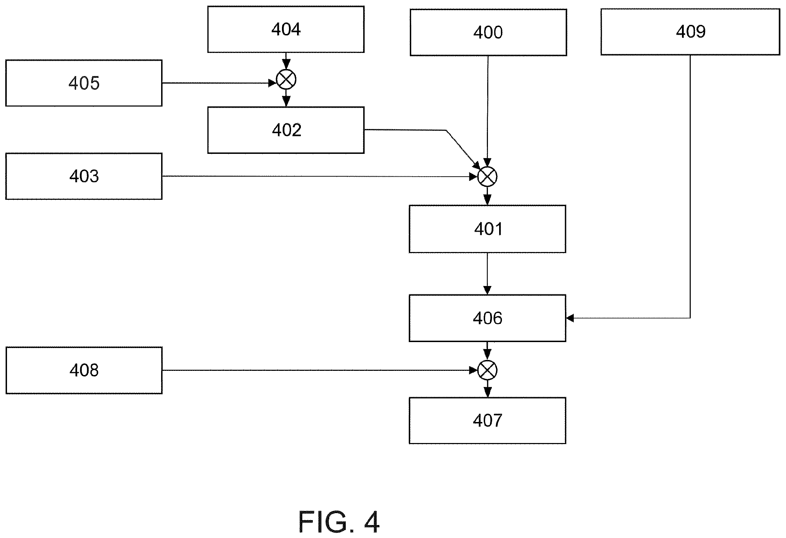

Referring to **figure 4,** this contains a flowchart illustrating a method for seamlessly embossing of micro- or nanostructures into a thermoformable layer of a sandwich structure according to an example embodiment of the invention. A carrier substrate **400** is used in the making of a sandwich structure **401** that comprises a layer of the carrier substrate **400** and a cover made of thermoformable layer in a viscous phase **402** by means of a mechanical apparatus **403** as appropriate. Prior to being in a viscous phase **402** a material **404** for the thermoformable layer, which may sometimes be provided as a precursor material, is melted into a viscous phase by supply of energy **405** as appropriate. The mechanical apparatus **403** is used in a step of applying the molten material **402** of the thermoformable material onto the layer of carrier substrate **400** to ensure a homogeneous distribution of the viscous layer on the carrier substrate and obtain the sandwich structure **401** prior to actual embossing **406** the micro- or nanostructures into the thermoformable layer. The latter involves feeding the sandwich structure **401** in a nip of a set of a first embossing roller and a second embossing roller, the first embossing roller comprising the embossing micro- or nanostructures, the thermoformable layer of material being oriented towards the first embossing roller and the layer of carrier substrate oriented towards the second embossing roller. A final embossed sandwich structure **407** is obtained after a step **408** of controlling a temperature of the sandwich structure at an output of the nip to a solidifying temperature of the thermoformable layer. The step of embossing **406** is configured to use the set of first embossing roller and second embossing roller **409** in which the first embossing roller and embossing micro- or nanostructures carried thereon are made from a single bulk material, the first embossing roller comprising the embossing micro- or nanostructures in form of at least a protrusion and/or at least a recess on its cylindrical surface, the second embossing roller having a smooth cylindrical surface, further whereby the micro- or nanostructures comprise at least embossing structures that are a combination of a plurality of structures, the combination comprising a first structure and a second structure, with respectively a first width and a second width in a scale of at least 5 to 1, or respectively a first height and a second height in the scale of at least 5 to 1.

In preferred embodiments, the carrier substrate material may be for example any one of items from the list comprising a metallic film, a plastic film, a textile-based film, a foil, and a substrate with a fibrous structure.

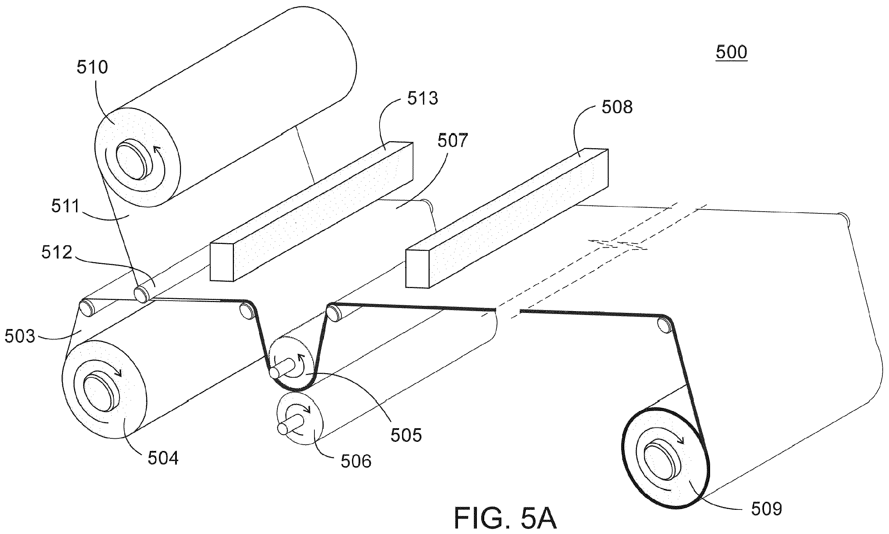

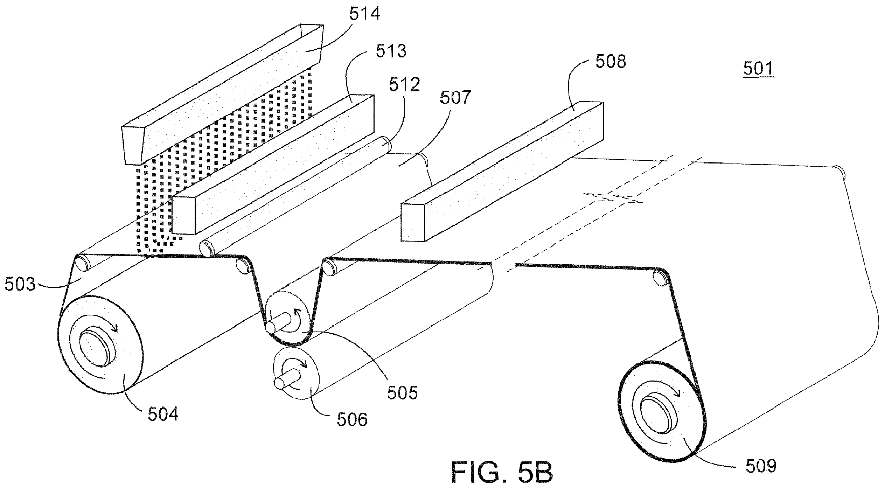

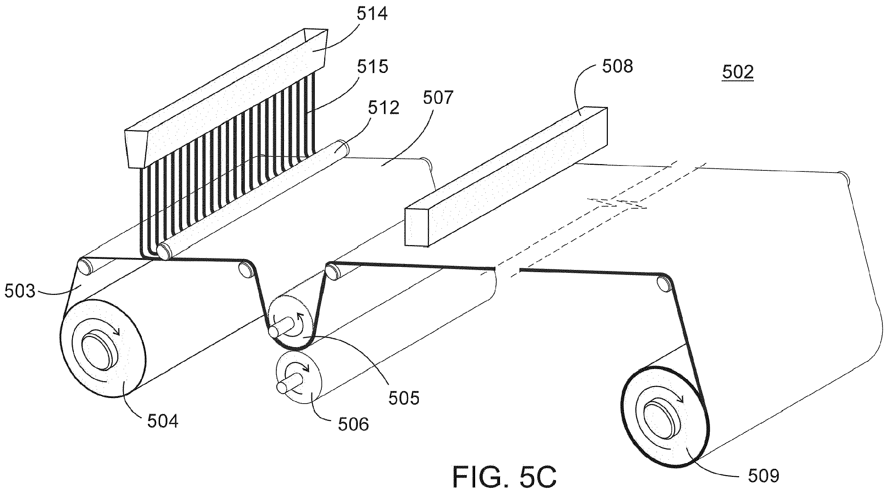

**Figures 5A** to **5C** contain schematic illustrations of set-ups **500-502** configured to implement the method for seamlessly embossing micro- or nanostructures into a thermoformable layer of a sandwich structure according to example embodiments of the invention, wherein the applying of molten material of the thermoformable layer is realized in different manners. The set-ups **500-502** have a number of features in common as follows:

- a carrier substrate **503** is provided from a supply reel **504**;
- a set of a first embossing roller **505** that carries the embossing micro- or nanostructures (not illustrated) on its cylindrical surface, and cooperates with a second embossing roller **506** with a smooth cylindrical surface to emboss a sandwich structure **507**;
- a temperature controlling device **508** configured to control a temperature of the sandwich structure at an output of the nip of the set of embossing rollers, to a solidifying temperature of the thermoformable layer; and
- a collecting reel **509** configured to collect the embossed sandwich structure **507** for further later use.

As already hinted, the set-ups **500-502** differ by the manner in which the applying of molten material of the thermoformable layer is realized.

In the set-up **500**, the thermoformable layer **511** is supplied from a thermoformable sheet reel **510** and brought into contact with the carrier substrate **503**. The contacting may be improved by an application roll **512**. The thermoformable layer is subsequently melted by an energy-delivering device **513** to adhere on the carrier substrate **503**, in form of a viscous layer of material, before being conveyed to the embossing rollers **505** and **506.**

In the set-up **501**, the thermoformable layer material is supplied from a container **514** in form of powder and deposited on the carrier substrate **503** before being conveyed to be melted by the energy-delivering device **513** to adhere on the carrier substrate **503**. The adhering may be improved by means of the application roll **512**.

In the set-up **502**, the thermoformable layer material is supplied from the container **514** in form of viscous filaments or a viscous continuous curtain and deposited on the carrier substrate **503** before being conveyed to be melted by the energy-delivering device **513** to adhere on the carrier substrate **503**. The adhering may be improved by means of the application roll **512**.

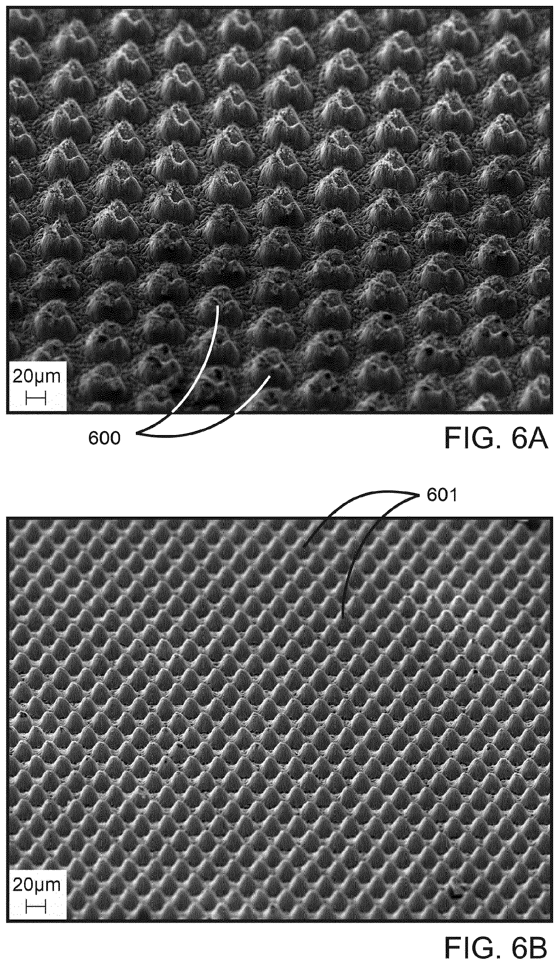

Referring to **figures 6A** to **6E**, these each contain a scanning electron microscope photograph of a surface of an embossed thermoformable layer carrying micro- or nanostructures embossed according to example embodiments of the invention.

**Figure 6A** shows embossing structures **600** that each are a combination of a plurality of smaller structures, and all have been positioned on the surface of the thermoformable layer in a regular grid. The smaller structures are not visible in isolation, only in their combination structure **600**.

The height of the combined structures is about 30 $\mu$m.

**Figure 6B** shows embossing structures **601** which in this case are each a single cone-shaped structure. The structures **601** are positioned in a regular grid.

The height of the structures is about 15 $\mu$m.

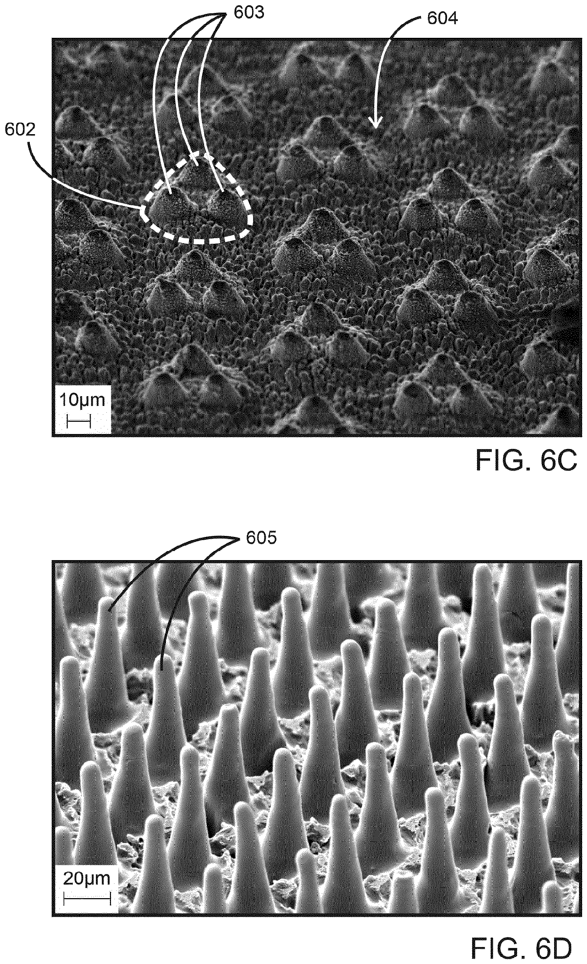

**Figure 6C** shows embossing structures **603** grouped by 3 respectively in a group **602**. The latter are positioned on the surface of the thermoformable layer in a regular grid. The very small roughness features **604** are attributable to a roughness on the non-embossed thermoformable layer, and are not created by embossing.

The height of the structures is about 10 $\mu$m.

**Figure 6D** shows embossing structures **605** which in this case are each a single cone-shaped structure. The structures **605** are positioned in a regular grid.

The height of the structures is about 40 $\mu$m.

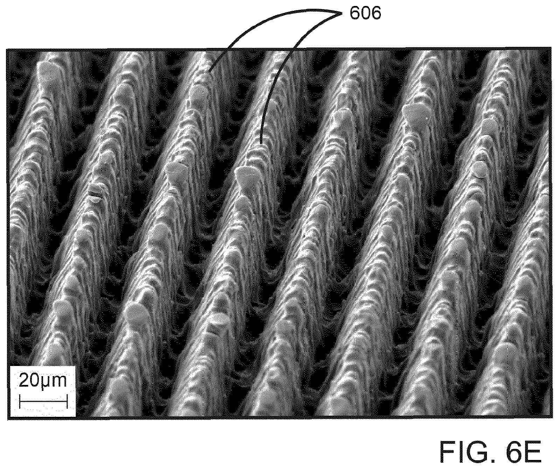

**Figure 6E** shows embossing structures **606** which constitute parallel ridges on the thermoformable layer, according to an example embodiment of the invention.

The height of the ridges is about 30 $\mu$m and their width is about 20 $\mu$m.

Various structures shown in **figures 6A-6E** may be combined among each other as appropriate.

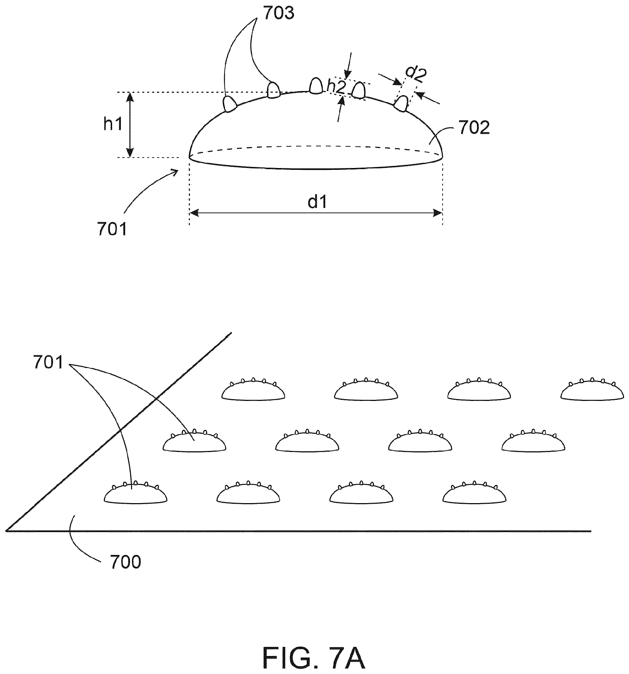

Referring to **figures 7A** to **7C**, these illustrate examples of a thermoformable layer embossed with combined structures and conglomerates of these combined structures. The structures illustrated are not necessarily represented in the right scale for reasons of readability.

**Figure 7A** shows a thermoformable layer **700** embossed with combined structures **701** positioned according to a regular grid. **Figure 7A** further shows a magnified version of the combined structure **701** which comprises a dome-shaped structure **702** having a width **d1** and a height **h1**. Also represented as part of the combined structure **701** are a plurality of smaller cone-shaped structures **703** distributed on a surface of the dome-shaped structure **702**, each having a width **d2** and a height **h2**. According to the invention the scale between widths on one hand and heights on the others is as follows:

$$(h1/h2) > 5 \quad \text{and} \quad (d1/d2) > 5$$

In preferred embodiments **d1** may vary between 5 $\mu$m and 100 $\mu$m, more preferably between 10 $\mu$m and 50 $\mu$m, whereas **h1** may be smaller than 100 $\mu$m, more preferably may vary between 5 $\mu$m and 30 $\mu$m.

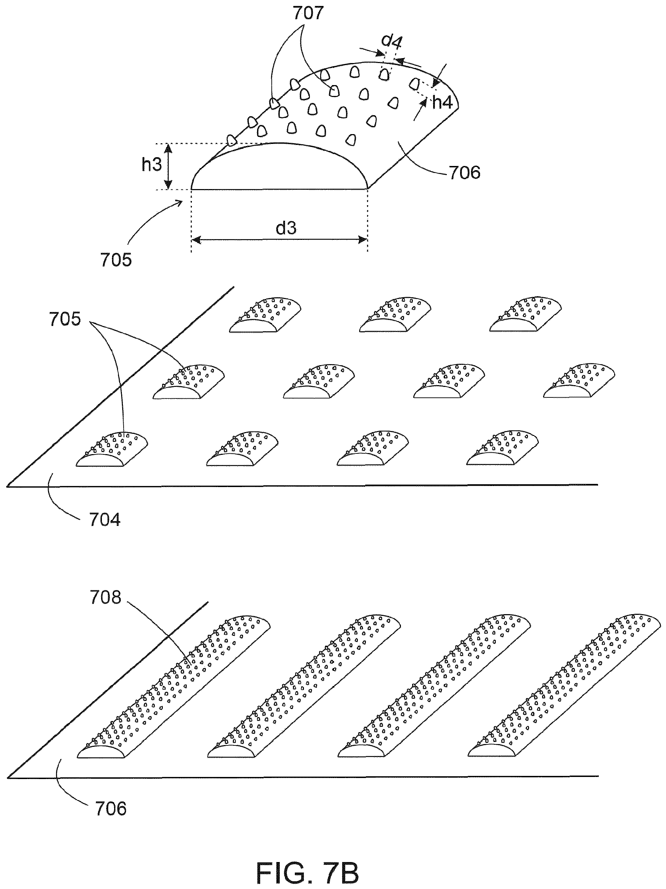

**Figure 7B** shows a thermoformable layer **704** embossed with combined structures **705** positioned according to a regular grid. **Figure 7B** further shows a magnified version of the combined structure **705** which comprises a round-shaped longitudinal structure **706** having a width **d3** and a height **h3**. Also represented as part of the combined structure **705** are a plurality of smaller cone-shaped structures **706** distributed on a surface of the round-shaped longitudinal structure **706**, each having a width **d4** and a height **h4**. According to the invention the scale between widths on one hand and heights on the others is as follows:

$$(h3/h4) > 5 \quad \text{and} \quad (d3/d4) > 5.$$

In preferred embodiments **d3** may vary between 5 $\mu$m and 100 $\mu$m, more preferably between 10 $\mu$m and 50 $\mu$m, whereas **h3** may be smaller than 100 $\mu$m, more preferably may vary between 5 $\mu$m and 30 $\mu$m.

**Figure 7B** further shows conglomerates of the combined structures **705** which form a series of parallel ridges **708**.

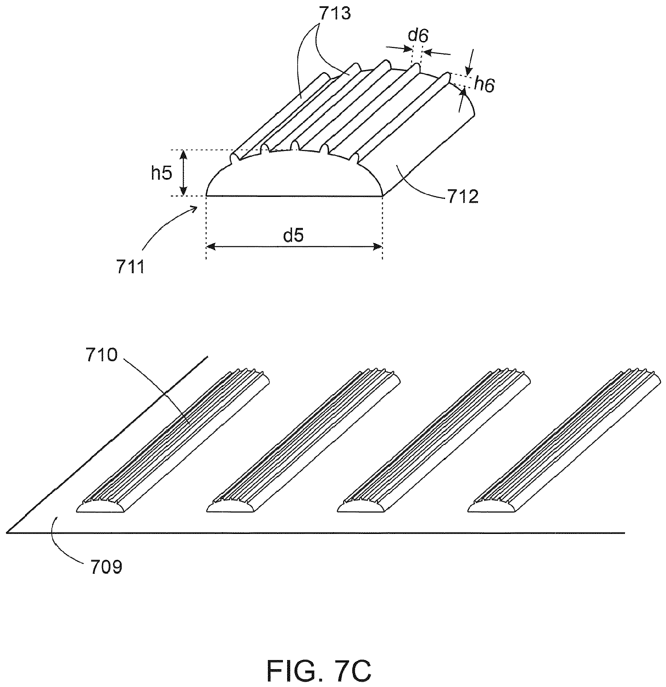

**Figure 7C** shows a thermoformable layer **709** embossed with conglomerates **710** of combined structures **711**. The combined structure **711** is also illustrated in isolation for reasons of better understandability. The combined structure **711** comprises a round-shaped longitudinal structure **712** having a width **d5** and a height **h5**. Also represented as part of the combined structure **711** are a plurality of smaller ridge structures **713** with a cone-shaped cross-section, distributed on a surface of the round-shaped longitudinal structure **712**, each having a width **d6** and a height **h6**. According to the invention the scale between widths on one hand and heights on the others is as follows:

$$(h5/h6) > 5 \quad \text{and} \quad (d5/d6) > 5.$$

In preferred embodiments, **d5** may vary between 5 $\mu$m and 100 $\mu$m, more preferably between 10 $\mu$m and 50 $\mu$m, whereas **h5** may be smaller than 100 $\mu$m, more preferably may vary between 5 $\mu$m and 30 $\mu$m.

In the present example the conglomerates **710** form a series of parallel ridges.

According to the invention, a total height of structures and/or combined structures is merely limited by a thickness of the thermoformable layer. This enable to make structures and/or combined structures much greater in height than in prior art as described in the present description, because in prior art the height of structures is strictly limited by the technology for structuring the embossing roller's surface, which is photoresist layer technology. The latter is limited to a maximum of 2 $\mu$m, whereas the invention may go way beyond this limit. See for example **figure 6D** where the structures **605** have a height of around 40 $\mu$m.

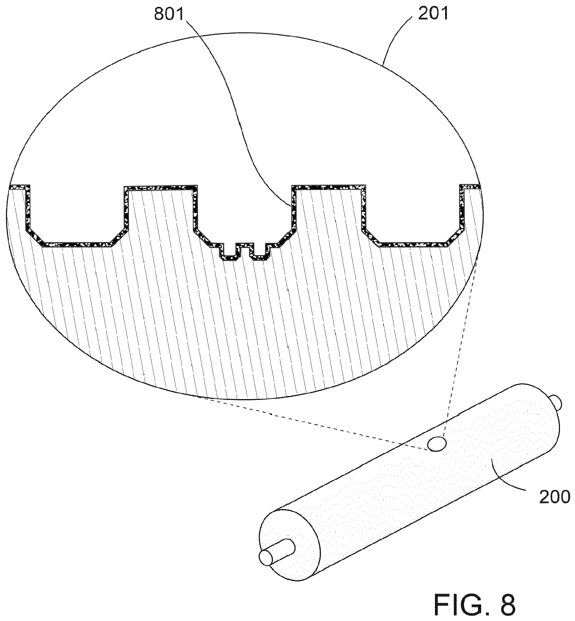

**Figure 8** shows a preferred embodiment of the embossing roller **200** according to the invention, in which the roller **200** is coated with a thin, i.e., with a thickness below 10 $\mu$m, vacuum-deposited coating **801** having anti-adhesion properties. The magnified view **201** shows the coating **801** homogeneously recovering the micro- and nanostructures.

In a preferred embodiment, the coating **801** may consist of a PECVD-deposited diamond-like carbon (DLC) layer with a thickness smaller than 5 $\mu$m.

Thickness of thermoformable layer

There is a minimum value for the thickness of the thermoformable layer, given by the peak-to-valley height between the highest protrusion and the lowest recess of the embossing micro- and nanostructures of the first embossing roller and a maximum value that is rather given by economical or technological considerations, namely at around 50 $\mu$m.

The temperature of the thermoformable layer is imposed by the glass transition temperature of the specific material **404** and it may be situated at roughly

- 80°C for PET (Polyethylene Terephthalate);
- 85°C for PVC (Polyvinyl Chloride);
- 100 °C for PS (Polystyrene); and
- 145°C for PC (Polycarbonate).

**Claims**

1. Method for seamlessly embossing micro- or nanostructures into at least one thermoformable layer of a sandwich structure,

   the sandwich structure comprising a layer of carrier substrate and a cover made of the at least one thermoformable layer,
   whereby the micro- or nanostructures comprise at least embossing structures that are a combination of a plurality of structures, the combination comprising a first structure and a second structure, with respectively a first width and a second width in a scale of at least 5 to 1, or respectively a first height and a second height in the scale of at least 5 to 1,
   the method comprising

      melting material of the at least one thermoformable layer to a viscous phase;
      applying the molten material of the at least one thermoformable layer onto the layer of carrier substrate to obtain the sandwich structure prior to embossing;

   the method further comprising

      maintaining the material of the at least one thermoformable layer in the viscous phase prior to embossing;
      feeding the sandwich structure in a nip of a set of a first embossing roller and a second embossing roller, the first embossing roller and the embossing micro- or nanostructures carried thereon being made from a single bulk material, the first embossing roller comprising the embossing micro- or nanostructures in form of at least a protrusion and/or at least a recess on its cylindrical surface, the second embossing roller having a smooth cylindrical surface, the at least one thermoformable layer of material being oriented towards the first embossing roller and the layer of carrier substrate oriented towards the second embossing roller;
embossing the micro- or nanostructures into the at least one thermoformable layer; and
controlling a temperature of the sandwich structure at an output of the nip to a solidifying temperature of the at least one thermoformable layer.

2. The method of claim 1, wherein the feeding of the sandwich structure in the nip is done at a speed between 50 m/min and 1500 m/min.

3. The method of claim 2, wherein the feeding of the sandwich structure in the nip is done at a speed between 100 and 500 m/min.

4. The method of claim 1, wherein

the carrier substrate is made of a fiber-based substance; and
the step of applying of the molten material of the at least one thermoformable layer onto the layer of carrier substrate causes at least part of the molten material of the at least one thermoformable layer to infiltrate into interstices between the fibers the carrier substrate, thereby forming a strengthened conglomerate.

5. The method of claim 1, wherein the applying of the molten material of the at least one thermoformable layer onto the layer of carrier substrate comprises an injection under pressure of the molten material.

6. The method of claim 1, wherein the step of maintaining the material of the at least one thermoformable layer in a viscous phase comprises a thermal management of the material of the thermoformable layer by any one of the means from the list comprising an oven, an infrared source of heat, an electromagnetic radiation source, a heated mass, pressure heating.

7. The method of claim 1, wherein the first embossing roller comprises a single metal or a metallic alloy from the following list comprising steel, copper, aluminum, lead, nickel, tin, titanium, zinc, brass and bronze.

8. The method of claim 1, wherein the first embossing roller comprises a ceramic material such as carbides, oxides, nitrides, carbo-nitrides of one of the following elements: B, Al, Si, Cr, Ti or any combination thereof.

9. The method of claim 1, further wherein the micro- or nanostructures further comprise any one of grooves and ridges.

10. The method of any one of the preceding claims, further wherein the thermoformable material is any one of the list comprising a thermoformable polymer and a thermoformable elastomer.

11. The method of any one of the preceding claims, further comprising providing the embossing roller with a coating configured to prevent an adhesion of the viscous phase of the at least one thermoformable layer, and to prevent a sticking phenomenon.

12. The method of the previous claim, wherein the coating is a vacuum-deposited coating having a thickness of less than 10 $\mu$m, preferably less than 5 $\mu$m, and comprising diamond-like carbon (DLC) to homogeneously cover the micro or nanostructures.

13. The method of any one of the preceding claims, further wherein the carrier substrate material is any one of items from the list comprising a metallic film, a plastic film, a textile-based film, a foil, and a substrate with a fibrous structure.

14. The method of any one of the preceding claims, further comprising

providing a second thermoformable layer on a side of the carrier substrate opposite to the side on which the at least one thermoformable layer is formed,
maintaining a second material of the second thermoformable layer in a viscous phase prior to embossing;
providing the second embossing roller with further micro- or nanostructures for embossing these in the second thermoformable layer;
controlling a second temperature of the sandwich structure at an output of the nip to a solidifying temperature of the second thermoformable layer.

15. System for seamlessly embossing micro- or nanostructures into at least one thermoformable layer of a sandwich structure, wherein

the sandwich structure comprises a layer of carrier substrate and a cover made of the at least one thermoformable layer,

whereby the micro- or nanostructures comprise at least embossing structures that are a combination of a plurality of structures, the combination comprising a first structure and a second structure, with respectively a first width and a second width in a scale of at least 5 to 1, or respectively a first height and a second height in the scale of at least 5 to 1,

the system comprising

a melting system configured for melting material of the at least one thermoformable layer to a viscous phase;

an application system configured for applying the molten material of the at least one thermoformable layer onto the layer of carrier substrate to obtain the sandwich structure prior to embossing;

the system further comprising

a first thermal management system configured for maintaining the material of the at least one thermoformable layer in the viscous phase prior to embossing;

a conveyer system configured for feeding the sandwich structure in a nip of a set of a first embossing roller and a second embossing roller configured to emboss the micro- or nanostructures into the at least one thermoformable layer, wherein

the first embossing roller and embossing micro or nanostructures carried thereon are made from a single bulk material,

the first embossing roller comprises the embossing micro- or nanostructures in form of at least a protrusion and/or at least a recess on its cylindrical surface,

the second embossing roller has a smooth cylindrical surface, and

the at least one thermoformable layer of material is oriented towards the first embossing roller and the layer of carrier substrate oriented towards the second embossing roller; and

a second thermal management system configured for controlling a temperature of the sandwich structure at an output of the nip to a solidifying temperature of the at least one thermoformable layer.

16. The system of claim 15, wherein

the sandwich structure further comprises a second thermoformable layer on a side of the carrier substrate opposite to the side on which the at least one thermoformable layer is formed,

the first thermal management system is further configured to maintain a second material of the second thermoformable layer in the viscous phase prior to embossing;

the second embossing roller is configured to comprise further micro- or nanostructures for embossing these in the second thermoformable layer;

the second thermal management system is further configured for controlling a second temperature of the sandwich structure at an output of the nip to a solidifying temperature of the second thermoformable layer.

FIG. 1A

FIG. 1B

FIG. 2A

FIG. 2B

FIG. 2C

FIG. 2D

FIG. 3A

FIG. 3B

FIG. 3C

FIG. 3D

FIG. 3E

FIG. 4

EP 4 389 393 A1

FIG. 5A

FIG. 5B

FIG. 5C

EP 4 389 393 A1

FIG. 6A

FIG. 6B

FIG. 6C

FIG. 6D

606

20µm

FIG. 6E

FIG. 7A

FIG. 7B

FIG. 7C

FIG. 8

Europäisches
Patentamt

European
Patent Office

Office européen
des brevets

# EUROPEAN SEARCH REPORT

Application Number

EP 22 21 5159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 10 532 510 B2 (INMOLD [DK]; DANAPAK FLEXIBLES [DK] ET AL.) 14 January 2020 (2020-01-14) * the whole document * | 1-16 | INV. B29C59/04 B29C43/46 |
| A | US 2016/107371 A1 (HURME EERO [FI] ET AL) 21 April 2016 (2016-04-21) * the whole document * | 1-16 | |

TECHNICAL FIELDS
SEARCHED (IPC)

B29C
B32B

The present search report has been drawn up for all claims

| Place of search | Date of completion of the search | Examiner |
|---|---|---|
| Munich | 22 May 2023 | Schneider, Dominik |

EPO FORM 1503 03.82 (P04C01)

## ANNEX TO THE EUROPEAN SEARCH REPORT
## ON EUROPEAN PATENT APPLICATION NO.

**EP 22 21 5159**

**22-05-2023**

| Patent document cited in search report | | Publication date | Patent family member(s) | | Publication date |
|---|---|---|---|---|---|
| US 10532510 | B2 | 14-01-2020 | CA | 2978364 A1 | 01-10-2015 |
| | | | EP | 3122533 A1 | 01-02-2017 |
| | | | US | 2017100878 A1 | 13-04-2017 |
| | | | US | 2020139614 A1 | 07-05-2020 |
| | | | US | 2021129416 A1 | 06-05-2021 |
| | | | WO | 2015144174 A1 | 01-10-2015 |
| US 2016107371 | A1 | 21-04-2016 | US | 2016107371 A1 | 21-04-2016 |
| | | | WO | 2014053706 A1 | 10-04-2014 |

**EP 4 389 393 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10532510 B2, Pranov